(19) Europäisches Patentamt
European Patent Office
Office européen des brevets

(11) **EP 3 699 653 A1**

(12) **EUROPEAN PATENT APPLICATION**

(43) Date of publication:
**26.08.2020 Bulletin 2020/35**

(51) Int Cl.:
**G02B 6/122** *(2006.01)* **G02B 6/42** *(2006.01)*
**G02B 6/12** *(2006.01)* **G02B 6/10** *(2006.01)*

(21) Application number: **19158810.2**

(22) Date of filing: **22.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **AIP Leibniz-Institut für Astrophysik 14482 Potsdam (DE)**

(72) Inventor: **MINARDI, Stefano 07745 Jena (DE)**

(74) Representative: **Heinemeyer, Karsten AdvInno Patent-u. Rechtsanwaltspart. mbB Heinemeyer & Joachim Sandstrasse 17-23 23552 Lübeck (DE)**

(54) **PLANAR DISCRETE BEAM COMBINER FOR RETRIEVING COHERENCE PROPERTIES OF THE INCOMING LIGHT**

(57) The invention concerns a discrete beam combiner, manufactured with planar geometry, wherein the propagation constants of the waveguides (2) are not uniform across the array, realized by a suitable choice of the core width of each waveguide (2)

Fig. 1

## Description

Discrete beam combiners are periodic arrays of evanescently coupled waveguides used for retrieving coherence properties of incoming light.

Discrete beam combiner so far are designed with three-dimensional geometry and are normally manufactured by means of ultrafast laser inscription. While the manufacturing precision allows manufacturing small arrays of waveguides, long range stresses are induced in the substrate, hampering their performance. Additionally relatively high propagation losses, in the range of 0,3 to 1,0 dB/cm are reported for components made by ultrafast laser inscription.

Finally, ultrafast laser inscription is not suitable for large serial production of the components.

Objective of the present invention is to provide are more effective way of manufacturing discrete beam combiners.

It was found that a discrete beam combiner does not require the three-dimensional arrangement of the waveguides and can be manufactured with planar geometry, provided the propagation constants of the waveguides are not uniform across the array. The propagation constant of each individual waveguide can be controlled in a simple way by a suitable choice of the core width of the waveguide.

Until now it was known that a sufficient condition for a discrete beam combiner to work is the arrangement of the waveguides as a two-dimensional array in the cross section. For example an array with twenty-five waveguides, arranged on a square quadratic array can be used to retrieve the coherence properties of four input light fields (see "Nonlocality of coupling and the retrieval of field correlations with arrays of waveguides", PHYSICAL REVIEW A 92, 013804 (2015), Stefano Minardi). In this array the waveguides are arranged like a matrix with five rows and five columns. Such geometry allows the evanescent coupling of the waveguides beyond the nearest neighbor site, which is a sufficient condition to retrieve coherence properties of the incoming light with a periodic array of coupled waveguides.

Now it has been recognized by the inventor that it is also possible to build a discrete beam combiner using a planar array, i. e. the waveguides are arranged in one line. In the cross section, the waveguides constitute a one-dimensional array.

Thus, a planar geometry of the discrete beam combiner is possible. This allows using a more mature fabrication technology like photolithography or especially, photolithography on silica. As a consequence, a discrete beam combiner for retrieving coherence properties of the incoming light can be manufactured at higher quality and in large quantities allowing lower unit costs.

In one embodiment the waveguides are grouped to subarrays, wherein in each subarray every waveguide has a different radius. This allows good coupling between the different waveguides.

In one embodiment the waveguides have a core with circular cross-section and have radii between 2.8 μm and 3.2 μm, especially between 2.90 μm and 3.10 μm, more especially between 2.91 μm and 3.09 μm. The different radii ensure different propagation constants of the incoming light as mentioned above. This explains that using appropriate radii is relevant for the success of the invention. Using said radii was successful for retrieving the coherence properties of the incoming light.

The discrete beam combiner can be adapted to waveguides with rectangular or trapezoidal cross-section without imperilling its functionality, provided the same propagation and coupling constants can be maintained.

In one embodiment there are several sites for introducing several input fields in the discrete beam combiner, wherein the sites for introducing the input fields of the incoming light are at the beginning of the selected waveguides. These fields can be delivered from the edge of the component to the input sites of the array by suitable waveguides. As known in prior art (see "Photonic lattices for astronomical interferometry", Monthly Notices of the Royal Astronomical Society 422, 2656-2660 (2012), Stefano Minardi) the incoming light can be introduced only at specific sites. It could be shown that this way of introducing light in the discrete beam combiner is also advantageous with a discrete beam combiner according to the present invention.

In one embodiment, the subarrays have three to five waveguides, especially four waveguides. This number of waveguides of the subarrays has been found to be useful for retrieving coherence properties of the incoming light.

In one embodiment, the discrete beam combiner can be fabricated by photolithography, especially photolithography on silica substrates. As mentioned above a discrete beam combiner according to the present invention can be fabricated using photolithography. This allows manufacturing at higher quality and lower costs.

In one embodiment a pixel detector for detecting the light leaving the discrete beam combiner is arranged, especially wherein each waveguide a pixel is assigned. This concept is generally known in the prior art. It was found that such pixel detector is also useful for a discrete beam combiner according to the present invention. Of course, the geometry of the detector has to be adapted to the one-dimensional array of waveguides.

In one embodiment, the power of the light leaving the discrete beam combiner can be calculated using a transfer matrix, especially a V2PM calibration matrix (see e.g. E. Tatulli et al. "Interferometric data reduction with AMBER/VLTI. Principle, estimators, and illustration" Astron. Astroph. 464, 29-42 (2007)). The readout signal from the photodiodes is multiplied by the pseudo-inverse of the transfer matrix to retrieve the coherence properties of the input light fields. A simple calculation allows a fast calculation and in consequence fast determinations of the coherence properties of the incoming light, which is important in many applications.

In the following, the invention is explained based on preferred embodiments with reference to the drawing.

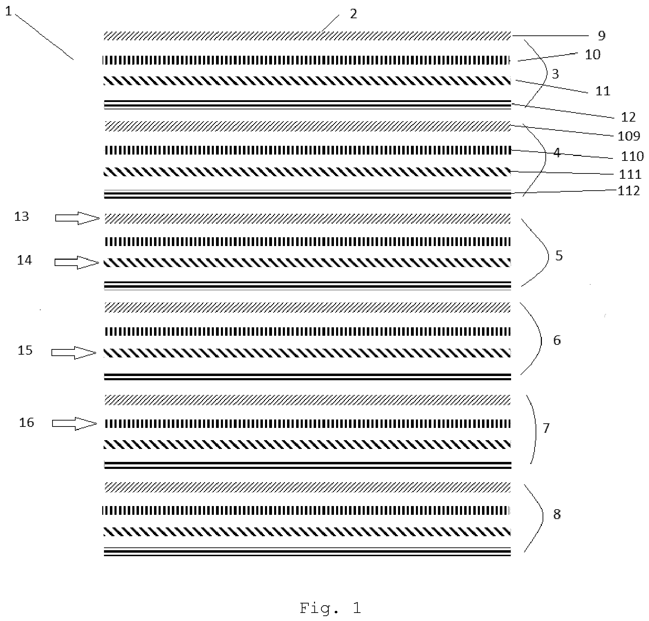

Fig. 1 shows schematically a planar discrete beam combiner.

Shown is a planar array 1 having twenty-four waveguides with numerical aperture 0.12 and a circular cross section. The waveguides 2 are grouped in six subarrays 3, 4, 5, 6, 7 and 8. The subarrays 3, 4, 5, 6, 7 and 8 each include four waveguides. Within one subarray, every waveguide has a different radius.

Looking at the first subarray 3, the first waveguide 9, painted as dotted line, has a radius of 2.98 $\mu$m. The next waveguide 10, painted as continuous line, has a radius of 3.03 $\mu$m. The following waveguide 11, painted as interrupted line has a radius of 3.09 $\mu$m and the waveguide 12, painted as interrupted and dotted line has a radius of 2.91 $\mu$m.

The second subarray 4 also contains four waveguides. The waveguide 109 is identical to the waveguide 9, the waveguide 110 identical to the waveguide 10, the waveguide 111 identical to the waveguide 11 and the waveguide 112 identical to the waveguide 12. Thus, the second subarray is identical to the first subarray.

In addition, the third subarray 5, the fourth subarray 6, the fifth subarray 7 and the sixth subarray 8 are identical to the first subarray 3. Especially in all subarrays 3, 4, 5, 6, 7 and 8 the waveguides have the same radius. Also in each subarray the order of the waveguides is identical; the first waveguide of each subarray has the radius 2.98 $\mu$m, the second the radius 3.03 $\mu$m, the third 3.09 $\mu$m and the fourth 2.91 $\mu$m.

All waveguides have a length of 5080 $\mu$m. The pitch between every waveguide is 13 $\mu$m. The width of the array 1, which means the extension perpendicular to the length, is 299 $\mu$m.

As indicated by the arrows four input fields of oncoming light are introduced. The first input field 13 is introduced at the first waveguide of the third subarray 5 with the radius 2.98 $\mu$m. The second input field 14 is introduced at the third waveguide of the third subarray 5 with the radius 3.09 $\mu$m. The third input field 15 is introduced at the third waveguide of the fourth subarray 6 with the radius 3.09 $\mu$m. Finally, the fourth input field 16 is introduced at the second waveguide of the fifth subarray 7 with the radius 3.03 $\mu$m.

In the figure the detection and analyzing the light leaving the planar array 1 is not shown. A pixel detector with twenty-four pixels, wherein each waveguide a pixel is assigned, can do this. As mentioned above this concept is generally known in prior art (see "Nonlocality of coupling and the retrieval of field correlations with arrays of waveguides", PHYSICAL REVIEW A 92, 013804 (2015), Stefano Minardi).

Although the invention has been explained in more detail by means of the exemplary embodiments, the invention shall not be restricted be the disclosed examples. Other variations can be found by a man skilled in the art without leaving the scope of protection.

Especially it should be clear that the values of the radii of the waveguides and the pitches between the waveguides can be varied by a man skilled in the art. Different core cross-sections geometries can also be chosen to implement the device. Also the numbers of the subarrays may be varied. It cannot be excluded that maybe a more efficient way realizing the discrete beam combiner according the invention can be found. Nevertheless, the example described above has been demonstrated that the invention can be realized in an efficient way.

List of reference numbers

[0025]

| | |
|---|---|
| 1 | planar array |
| 2 | Waveguides |
| 3 | first subarray |
| 4 | second subarray |
| 5 | third subarray |
| 6 | fourth subarray |
| 7 | fifth subarray |
| 8 | sixth subarray |
| 9 | first waveguide of the first subarray |
| 10 | second waveguide of the first subarray |
| 11 | third waveguide of the first subarray |
| 12 | fourth waveguide of the first subarray |
| 13 | first input field of incoming light |
| 14 | second input field of incoming light |
| 15 | third input field of incoming light |
| 16 | fourth input field of incoming light |
| 109 | first waveguide of the second subarray |
| 110 | second waveguide of the second subarray |
| 111 | third waveguide of the second subarray |
| 112 | fourth waveguide of the second subarray |

**Claims**

1. Discrete beam combiner, manufactured with planar geometry, wherein the propagation constants of the waveguides (2) are not uniform across the array, realized by a suitable choice of the core width of each waveguide (2)

2. Discrete beam combiner according to claim 1, **characterized in, that** the waveguides (2) are grouped to subarrays (3, 4, 5, 6, 7, 8), wherein in each subarray (3, 4, 5, 6, 7, 8) the core width of every waveguide (2) is different.

3. Discrete beam combiner according to one of the preceding claims, **characterized in, that** the waveguides (2) have a core with circular cross sec-

**EP 3 699 653 A1**

tion and radii between 2.8 $\mu$m and 3.2 $\mu$m, especially between 2.90 $\mu$m and 3.10 $\mu$m, more especially between 2.91 $\mu$m and 3.09 $\mu$m.

4. Discrete beam combiner according to one of the preceding claims, **characterized in, that** there are several sites for introducing several input fields (13, 14, 15, 16) of incoming light in the discrete beam combiner, wherein the sites for introducing the input fields (13, 14, 15, 16) are at the beginning of selected waveguides (2).

5. Discrete beam combiner according to one of the claims 2 to 4, **characterized in, that** the subarrays (3,4, 5, 6, 7, 8) have three to five waveguides (2), especially four waveguides.

6. Discrete beam combiner according to one of the preceding claims, **characterized in, that** the discrete beam combiner can be fabricated by photolithography, especially photolithography on silica substrates.

7. Discrete beam combiner according to one of the preceding claims, **characterized in, that** a pixel detector for detecting the light leaving the discrete beam combiner is arranged, especially wherein to each waveguide (2) a pixel is assigned.

8. Discrete beam combiner according to one of the preceding claims, **characterized in, that** the power of the light leaving the discrete beam combiner can be calculated using a transfer matrix, especially a V2PM calibration matrix.

Fig. 1

Europäisches
Patentamt
European
Patent Office
Office européen
des brevets

## EUROPEAN SEARCH REPORT

Application Number

EP 19 15 8810

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/049998 A1 (DUMAIS PATRICK [CA]) 19 February 2015 (2015-02-19) * abstract; figure 10 * * paragraphs [0003], [0026] - [0028] * | 1-8 | INV. G02B6/122 ADD. G02B6/42 |
| X | US 4 878 724 A (THANIYAVARN SUWAT [US]) 7 November 1989 (1989-11-07) * column 5, line 63 - column 6, line 33; figure 4 * | 1-8 | G02B6/12 G02B6/10 |
| X | CN 104 849 811 A (UNIV NANJING) 19 August 2015 (2015-08-19) * figure 1 * | 1-8 | |
| X | TAKAGI A ET AL: "DESIGN AND FABRICATION OF BROAD-BAND SILICA-BASED OPTICAL WAVEGUIDECOUPLERS WITH ASYMMETRIC STRUCTURE", IEEE JOURNAL OF QUANTUM ELECTRONICS, IEEE SERVICE CENTER, PISCATAWAY, NJ, USA, vol. 28, no. 4, 1 April 1992 (1992-04-01), pages 848-855, XP000272710, ISSN: 0018-9197, DOI: 10.1109/3.135202 * figures 1,3 * | 1,4,6 | |
| X | US 2016/231506 A1 (JIANG WEI [US]) 11 August 2016 (2016-08-11) * paragraph [0035]; figures 1,11 * * paragraphs [0006] - [0009] * | 1-8 | |

TECHNICAL FIELDS
SEARCHED      (IPC)

G02B

-/--

The present search report has been drawn up for all claims

| Place of search | Date of completion of the search | Examiner |
|---|---|---|
| The Hague | 14 August 2019 | Bourhis, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number

EP 19 15 8810

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LABADIE LUCAS ET AL: "Photonics-based mid-infrared interferometry: 4-year results of the ALSI project and future prospects", PROCEEDINGS OF SPIE; [PROCEEDINGS OF SPIE ISSN 0277-786X VOLUME 10524], SPIE, US, vol. 10701, 9 July 2018 (2018-07-09), pages 107011R-107011R, XP060110059, DOI: 10.1117/12.2312930 ISBN: 978-1-5106-1533-5 * page 3 - page 4 * ----- | 7,8 | |

TECHNICAL FIELDS
SEARCHED (IPC)

The present search report has been drawn up for all claims

| Place of search | Date of completion of the search | Examiner |
|---|---|---|
| The Hague | 14 August 2019 | Bourhis, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 15 8810

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2019

| Patent document cited in search report | | Publication date | Patent family member(s) | | Publication date |
|---|---|---|---|---|---|
| US 2015049998 | A1 | 19-02-2015 | CN 105474057 A | | 06-04-2016 |
| | | | EP 3033642 A1 | | 22-06-2016 |
| | | | JP 2016530561 A | | 29-09-2016 |
| | | | KR 20160034395 A | | 29-03-2016 |
| | | | US 2015049998 A1 | | 19-02-2015 |
| | | | WO 2015021923 A1 | | 19-02-2015 |
| US 4878724 | A | 07-11-1989 | NONE | | |
| CN 104849811 | A | 19-08-2015 | NONE | | |
| US 2016231506 | A1 | 11-08-2016 | CN 108307658 A | | 20-07-2018 |
| | | | US 2016231506 A1 | | 11-08-2016 |
| | | | WO 2015038927 A2 | | 19-03-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEFANO MINARDI.** Nonlocality of coupling and the retrieval of field correlations with arrays of waveguides. *PHYSICAL REVIEW A 92,* 2015, 013804

- Photonic lattices for astronomical interferometry. *Monthly Notices of the Royal Astronomical Society,* 2012, vol. 422, 2656-2660
- **E. TATULLI et al.** Interferometric data reduction with AMBER/VLTI. Principle, estimators, and illustration. *Astron. Astroph.,* 2007, vol. 464, 29-42